# EUROPEAN PATENT SPECIFICATION

(11) **EP 3 012 120 B1**
(45) Date of publication and mention of the grant of the patent: **04.07.2018**
(21) Application number: 15189417.7
(22) Date of filing: 12.10.2015
(51) Int. Cl.: B60C 11/11, B60C 11/13, B60C 11/12

(54) **PNEUMATIC TIRE WITH SIPE ACTIVATION BOOSTERS**
LUFTREIFEN MIT LAMELLENAKTIVIERUNGSVERSTÄRKER
PNEU AVEC DES RENFORÇATEURS D'ACTIVATION DE LAMELLE

(30) Priority: 24.10.2014 US 201414522966
(43) Date of publication of application: 27.04.2016
(73) Proprietor: The Goodyear Tire & Rubber Company, Akron, Ohio 44316 (US)
(72) Inventor: PONS, Frederic Michel-Jean, 57100 Thionville (FR)
(74) Representative: Kutsch, Bernd

(56) References cited:
- EP-A1- 1 127 716
- DE-A1- 2 712 815
- JP-A- H 061 119
- JP-A- H0 616 016
- US-A1- 2009 101 260

## Description

### Field of the Invention

The present invention relates to a tread for a pneumatic tire and a pneumatic tire with improved gripping force on a frozen road surface or a snow covered road surface.

### Background of the Invention

In conventional pneumatic tires, particularly studless winter tires, various conventional methods attempt to improve performance on ice or snow. As a way for increasing a friction coefficient on an ice-snow road surface, grooves may be microscopically formed by using a short fiber-containing foamed rubber as a tread rubber and breaking away the short fibers exposed on a surface of the tread accompanied with the wearing of the tread rubber during the normal operation.

However, the microscopic grooves formed on the tread may be crushed as a load applied to the tire becomes large, and hence the effect of increasing the friction coefficient on the ice-snow road surface may not be sufficiently obtained. Also, the short fibers may be embedded in a foamed rubber at a state of extending in a straight line and substantially in parallel to a worn face of the tread. Thus, when the tread is worn, the short fibers exposed on the worn face of the tread may rapidly break away and degrade traction.

The short fibers may actually and frequently be embedded in the foamed rubber at a state of being curled through heat shrinkage in the vulcanization or pushing of the fibers into a groove portion of a mold part or a sipe portion to bend in the tread rubber. In this case, even if the tread is worn during the running, the short fibers substantially parallel to the worn face of the tread cannot easily be broken away from the foamed rubber, so that the microscopic grooves as originally intended cannot function efficiently.

Another conventional method for ensuring acceptable performance on ice or snow, tread rubber may contain closed spherical cells. Ice or snow may thaw to water by friction heat when the tread contacts the ice-snow road surface. This water may form a water membrane between the tread and the ice-snow road surface thereby deteriorating ice and/or snow performance. In this case, the water membrane may be partially negated by the action of irregularities on the tread formed by the closed spherical cells. Often, this method does not develop the sufficient water-removing effect because the irregularities formed on the tread by the closed cells may be very small.

This water/ice/snow removing effect has been enhanced by many continuous closed cells covered with a protection layer of a resin. These continuous closed cells may form ejection paths whereby water/ice/snow may be removed from the tread contact surface.

An example of a conventional winter tire tread is disclosed by US-B-8,757,229.

EP-A-1 127 716 describes a block-type tread pattern for a pneumatic tire comprising trapezoidal shaped circumferentially extending blind channels as well as a laterally extending sipe extending across a tread block and circumferentially extending sipes extending from the opposite side of the tread block than the blind trapezoidal channels.

### Summary of the Invention

The invention relates to a tire tread in accordance with claim 1 and to pneumatic tire in accordance with claim 7.

Dependent claims refer to preferred embodiment of the invention.

In a preferred aspect of the invention, a tread for a pneumatic tire in accordance with the present invention includes a plurality of trapezoidal channels, each trapezoidal channel extending circumferentially from a first end to a second end, the first end being wider than the second end, a sipe extending laterally adjacent the second ends of the trapezoidal channels, and a plurality of rectangular channels, each rectangular channel extending circumferentially from a first end to a second end, the first ends of the rectangular channels being adjacent the sipe.

According to another preferred aspect of the tread, each block of the tread contains the plurality of trapezoidal channels, the sipe, and the plurality of rectangular channels.

A pneumatic tire in accordance with a preferred aspect of the present invention includes a pair of annular, inextensible beads, a carcass ply extending between the beads, and a tread extending circumferentially around a radially outermost portion of the carcass ply, the tread including at least one tread block, the tread block including a plurality of trapezoidal channels, each trapezoidal channel extending circumferentially from a first end to a second end, the first end being wider than the second end, a sipe extending laterally adjacent the second ends of the trapezoidal channels, and a plurality of rectangular channels, each rectangular channel extending circumferentially from a first end to a second end, the first ends of the rectangular channels being adjacent the sipe.

### Brief Description of the Drawings

The features of the present invention, which are believed to be novel, are set forth with particularity in the appended claims. The invention, together with further objects and advantages thereof, may best be understood by making reference to the following description, taken in conjunction with the accompanying drawings, in the several figures of which like reference numerals identify identical elements, wherein:
FIG. 1 is a schematic orthogonal view of a tire tread in accordance with the present invention.
FIG. 2 is a schematic perspective/sectional view of the functioning of the tire tread of FIG. 1.

### Description of an Example Embodiment of the Present Invention

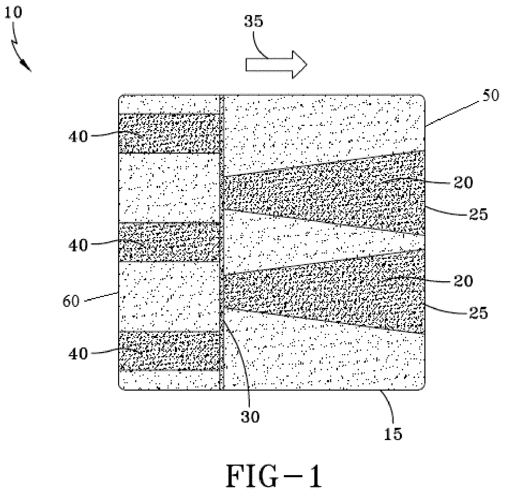

As shown in FIG. 1, sipes are used in winter tire tread designs to enhance the snow performance of pneumatic tires. Block edges of the tread are increased for improving snow grip. However, increased block edges necessitates an increase in sipes, grooves, and/or spaces where snow may become captured and defeat the purpose of the increased block edges. In accordance with the present invention, the tread blocks are staggered in order to decouple the sipes, grooves, and/or spaces and prevent snow from remaining in the sipes, grooves, and/or spaces. An example of a conventional winter tread is disclosed by US-B-8757229. One example tread 10 in accordance with present invention is shown in FIG. 1. Trapezoidal, preferably circumferential channels 20 (when viewed in top view onto the tread surface) operate to feed snow to a transverse sipe 30 preferably extending perpendicularly, i.e. at 90 degrees, or at an angle in the range of from 70 to 110 degrees or 80 to 100 degrees, to the rotation direction 35 of the tread 10. These trapezoidal channels 20 preferably extend in the rotation direction 35, i.e. at an angle of 0 degrees with respect to the rotation direction of the tire, thereby allowing snow to enter at the wider end 25. Alternatively, these trapezoidal circumferential channels 20 may extend under an angle in the range of from +/- 20 degrees or of from +/- 10 degrees or of from +/- 5 degrees in the rotation direction 35.

The two lateral sides of the trapezoidal channels 20 preferably extend under an angle of +10 degrees and - 10 degrees respectively with respect to the rotation direction 35. Alternatively, the two lateral sides of the trapezoidal circumferential channels 20 may extend under an angle in a range of from +5 to +20 degrees and -5 to -20 degrees respectively with respect to the rotation direction 35.

The axially wider ends 25 of the trapezoidal channels 20 are oriented toward the leading edge 50 of the tread bock 15 and the axially narrower ends of the of the trapezoidal channels 20 are oriented toward the trailing edge 60 of the tread bock 15.

The maximum axial width of the trapezoidal channels 20 is preferably in a range of from 2 to 10 mm, more preferably 2 to 5 mm or 3 to 6 mm. The minimum axial width of the circumferential channels 20 is preferably in a range of from 1.5 to 8 mm, more preferably 1.5 to 4 mm or 2 to 4 mm.

In a preferred aspect of the invention, the difference between the maximum axial width and the minimum axial width of the trapezoidal channels 20 is in a range of from 1 mm to 3 mm.

In one aspect of the invention, the radial depth of the trapezoidal channels 20 is constant and in a range of from 2.5 mm to 5 mm, preferably 2.5 mm to 4 mm.

In another aspect of the invention, the radial depth of the trapezoidal channels 20 may increase from the axially wider ends 25 toward the axially more narrow ends of the trapezoidal channels 20 by 0.5 to 2 mm, preferably 0.5 mm to 1 mm.

In an alternative embodiment, the trapezoidal channels 20 could also have a rectangular shape when viewed radially into the tread 10.

When viewed in cross-section in the rotation direction 35, the trapezoidal channels 20 may have a semicircular, semi ellipsoidal, a square or squarish, a rectangular, or a trapezoidal shape (with the wider end in cross section then being preferably oriented radially outwards) Preferably, the shape is rectangular or trapezoidal (preferably with rounded edges).

The sipe 30 joins at least one, preferably two to four, trapezoidal channels 20.

The circumferential width of the sipe 30 is preferably in a range of from 0.3 to 1.5 mm, more preferably 0.5 to 1 mm.

The sipe 30 extends preferably perpendicular to the direction of the at least one trapezoidal channel 20, e.g. into the axial direction of the tread 10, or under an angle in a range of from +/- 20 degrees, alternatively +/- 10 degrees of +/- 5 degrees with respect to the direction of the trapezoidal channels 20, i.e. in case the at least one trapezoidal channel 20 extends into the circumferential direction of the tread 10 the sipe 30 preferably extends under an angle in a range of from +/- 20 degrees, alternatively +/- 10 degrees of +/- 5 degrees with respect to the axial direction of the tire tread 10.

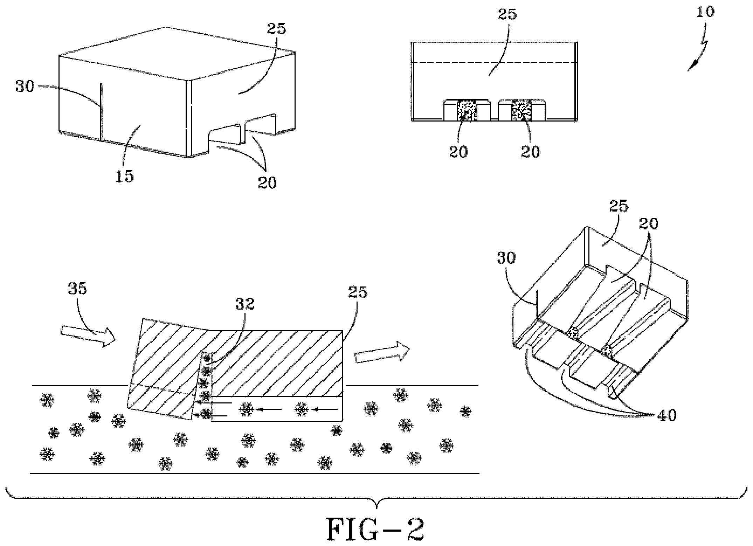

As shown in Fig. 2, the more narrow ends of the trapezoidal channels 20 opposite the wider ends 25 open into the sipe 30.

The radial depth of the sipe 30 is preferably in a range of from 3 to 8 mm or of from 4 to 7 mm in case of a passenger tire. The radial depth of the sipe 30 is preferably at least 1 mm, preferably at least 2-4 mm deeper than the radial depth of the trapezoidal channels 20 where opening into the sipe 30.

The sipe 30 joins, as shown in Fig. 1 for instance, the trapezoidal channels 20 to preferably rectangular circumferential channels 40 that are axially, or transversely, staggered relative to the trapezoidal channels 20.

The staggering of the circumferential channels 40 with respect of the trapezoidal channels 20 is preferably such that there is no overlap of the trapezoidal channels 20 and the circumferential channels 40 along the circumferential direction of the tread, i.e. the tread block 15 (when disregarding the sipe 30) closes the ends of the trapezoidal channels 20 adjacent the sipe 30. In other words, the circumferential channels 40 are axially, or transversely, staggered relative to the trapezoidal channels 20 with the offset of the circumferential channels 40 with respect to the trapezoidal channels being at least the minimum axial width of the circumferential channels 20.

The circumferential channels 40 preferably extend in the rotation direction 35, i.e. at an angle of 0 degrees with respect to the rotation direction of the tire. Alternatively, these circumferential channels 40 may extend under an angle in the range of from +/- 20 degrees or of from +/- 10 degrees or of from +/- 5 degrees in the rotation direction 35. In a preferred aspect of the invention, the circumferential channels 40 have a rectangular shape when viewed in top view onto the tread. Alternatively, they may have a trapezoidal shape similar to the shape of the trapezoidal channels 20. In one embodiment, the circumferential channels 40 may mimic (either mirrored or not mirrored at the sipe 30) the shape of the trapezoidal channels 20 in at least one or all aspects selected from the group consisting of depth of the circumferential channels 40, variation of the depth of the circumferential channels 40, width of the circumferential channels 40, variation of the width of the circumferential channels 40 and inclination of the circumferential channels 40 with respect to the circumferential direction of the tread 10.

The two lateral sides of the circumferential channels 40 preferably extend under an angle of 0 degrees or in a range of from +10 degrees to- 10 degrees with respect to the rotation direction 35. The maximum axial width of the circumferential channels 40 is preferably in a range of from 2 to 10 mm, more preferably 2 to 5 mm or 3 to 6 mm.

The minimum axial width of the circumferential channels 40 (if the axial width varies) is preferably in a range of from 2 to 10 mm, preferably 1.5 to 4 mm or 2 to 4 mm. In a preferred aspect of the invention, the difference between the maximum axial width and the minimum axial width of the circumferential channels 40 is 0 or is in a range of from 0.5 to 3 mm.

In a preferred aspect of the invention, the radial depth of the circumferential channels 40 is constant an in a range of from 2.5 mm to 5 mm, more preferably 2.5 mm to 4 mm. In another preferred aspect of the invention, the radial depth of the circumferential channels 40 may increase in a range of from by 0.5 to 2 mm, preferably 0.5 mm to 1 mm along the circumferential length of the circumferential channels 40.

The circumferential channels 40 may have a semicircular, semi ellipsoidal, a square or squarish, a rectangular, or a trapezoidal shape (with the wider end being preferably oriented radially outwards) when viewed in cross-section in the rotation direction 35. Preferably, the shape is rectangular or trapezoidal (preferably with rounded edges).

In a preferred aspect of the invention, two or three rows of trapezoidal channels 20 and two, three or four rows of circumferential channels 40 are located on a single tread block 15. Preferably, the number of circumferential channels 40 is by one larger than the number of trapezoidal channels 20 per respective tread block 15 comprising such channels 20, 40.

The trapezoidal channels 20 serve to "open-up" the sipe 30 when the pneumatic tire is rotating at a constant speed or accelerating (FIG. 2). The rectangular channels 40 serve to "open-up" the sipe 30 when pneumatic tire is decelerating, or braking (FIG. 2).

This functioning of the tread 10 allows increased and quicker snow jam into the sipe 30 by generating a more efficient sipe opening 32 and an increase in snow performance of the pneumatic tire. Due to this greater efficiency of the sipe 30, sipe depths may be reduced to increase overall tread pattern stiffness (e.g., ride and handling improvement).

## Claims

1. A tread for a pneumatic tire, the tread (10) comprising:
one or more trapezoidal channels (20), each trapezoidal channel (20) extending under an angle in a range of from +/- 20 degrees in the rotation direction (35) of the tread from a first end (25) to a second end, the first end (25) being wider than the second end;
**characterised in that** the tread (10) further comprises:
a sipe (30) extending substantially laterally, under an angle in a range of from 70 to 110 degrees to the rotation direction (35) of the tread, adjacent the second end of one or more of the trapezoidal channels (20), the second end joining into the sipe (30); and
one or more further channels (40), each further channel (40) extending under an angle in a range of from +/- 20 degrees in the rotation direction (35) of the tread from a first end to a second end, wherein the first end of the further channel (40) is adjacent the sipe (30) and joins into the sipe (30); and wherein the one or more further channels (40) are axially or transversely staggered relative to the one or more trapezoidal channels (20), wherein axially or transversely means in a direction perpendicular to the rotation direction (35) of the tread.

2. The tread as set forth in claim 1 wherein the tread (10) comprises a plurality of tread blocks (15) and wherein each tread block (15) comprises at least one, preferably a plurality of said trapezoidal channels (20), the sipe (30), and a plurality of said further channels (40).

3. The tread as set forth in claim 1 wherein each trapezoidal channel (20) extends under an angle in a range of from +/- 10 degrees in the rotation direction (35) of the tread.

4. The tread as set forth in claim 1 wherein each further channel (40) extends under an angle in a range of from +/- 10 degrees in the rotation direction (35) of the tread

5. The tread as set forth in claim 1 wherein each trapezoidal channel (20) extends under an angle of 0 degree in the rotation direction (35) of the tread.

6. The tread as set forth in claim 1 wherein each further channel (40) extends under an angle of 0 degree in the rotation direction (35) of the tread

7. A pneumatic tire comprising a tread in accordance with one of the previous claims.

8. The tire of claim 7 further comprising a pair of annular, inextensible beads; a carcass ply extending between the beads; and said tread (10).

## Patentansprüche

1. Lauffläche für einen Luftreifen, wobei die Lauffläche (10) umfasst:
einen oder mehr trapezförmige Kanäle (20), wobei jeder trapezförmige Kanal (20) sich unter einem Winkel in einem Bereich von +/- 20 Grad in der Drehrichtung (35) der Lauffläche von einem ersten Ende (25) zu einem zweiten Ende erstreckt, wobei das erste Ende (25) breiter als das zweite Ende ist;
**dadurch gekennzeichnet, dass** die Lauffläche (10) weiter umfasst:
eine Lamelle (30), die sich im Wesentlichen seitlich, unter einem Winkel in einem Bereich von 70 bis 110 Grad zur Drehrichtung (35) der Lauffläche, benachbart zu dem zweiten Ende von einem oder mehreren der trapezförmigen Kanäle (20) erstreckt, wobei das zweite Ende an die Lamelle (30) anschließt; und
einen oder mehr weitere Kanäle (40), wobei jeder weitere Kanal (40) sich unter einem Winkel in einem Bereich von +/- 20 Grad in der Drehrichtung (35) der Lauffläche von einem ersten Ende zu einem zweiten Ende erstreckt, wobei das erste Ende des weiteren Kanals (40) benachbart zu der Lamelle (30) ist und an die Lamelle (30) anschließt; und wobei die ein oder mehr weiteren Kanäle (40) bezüglich der ein oder mehr trapezförmigen Kanäle (20) axial oder transversal versetzt sind, wobei axial oder transversal in einer Richtung senkrecht zur Drehrichtung (35) der Lauffläche bedeutet.

2. Lauffläche nach Anspruch 1, wobei die Lauffläche (10) eine Vielzahl von Profilblöcken (15) umfasst und wobei jeder Profilblock (15) mindestens einen, bevorzugt eine Vielzahl der trapezförmigen Kanäle (20), die Lamelle (30), und eine Vielzahl der weiteren Kanäle (40) umfasst.

3. Lauffläche nach Anspruch 1, wobei jeder trapezförmige Kanal (20) sich unter einem Winkel in einem Bereich von +/- 10 Grad in der Drehrichtung (35) der Lauffläche erstreckt.

4. Lauffläche nach Anspruch 1, wobei jeder weitere Kanal (40) sich unter einem Winkel in einem Bereich von +/- 10 Grad in der Drehrichtung (35) der Lauffläche erstreckt.

5. Lauffläche nach Anspruch 1, wobei jeder trapezförmige Kanal (20) sich unter einem Winkel von 0 Grad in der Drehrichtung (35) der Lauffläche erstreckt.

6. Lauffläche nach Anspruch 1, wobei jeder weitere Kanal (40) sich unter einem Winkel von 0 Grad in der Drehrichtung (35) der Lauffläche erstreckt.

7. Luftreifen, umfassend eine Lauffläche gemäß einem der vorhergehenden Ansprüche.

8. Reifen nach Anspruch 7, weiter ein Paar ringförmiger, nicht ausdehnbarer Wülste; eine sich zwischen den Wülsten erstreckende Karkassenlage; und die Lauffläche (10) umfassend.

## Revendications

1. Bande de roulement pour un bandage pneumatique, la bande de roulement (10) comprenant :
un ou plusieurs canaux trapézoïdaux (20), chaque canal trapézoïdal (20) s'étendant en formant un angle dans la plage de +/-20 degrés dans la direction de rotation (35) de la bande de roulement depuis une première extrémité (25) jusqu'à une seconde extrémité, la première extrémité (25) étant plus large que la seconde extrémité ;
**caractérisée en ce que** la bande de roulement (10) comprend également :
une lamelle (30) s'étendant essentiellement en direction latérale en formant un angle dans la plage de 70 à 110 degrés par rapport à la direction de rotation (35) de la bande de roulement, en position adjacente à la seconde extrémité d'un ou de plusieurs canaux parmi les canaux trapézoïdaux (20), la seconde extrémité se joignant à la lamelle (30) ; et
un ou plusieurs canaux supplémentaires (40), chaque canal supplémentaire (40) s'étendant en formant un angle dans la plage de +/- 20 degrés dans la direction de rotation (35) de la bande de roulement, depuis une première extrémité jusqu'à une seconde extrémité, dans laquelle la première extrémité du canal supplémentaire (40) est adjacente à la lamelle (30) et rejoint la lamelle (30) ; et dans laquelle lesdits un ou plusieurs canaux supplémentaires (40) sont décalés en direction axiale ou en direction transversale par rapport auxdits un ou plusieurs canaux trapézoïdaux (20), la direction axiale ou la direction transversale désignant une direction perpendiculaire à la direction de rotation (35) de la bande de roulement.

2. Bande de roulement selon la revendication 1, dans laquelle la bande de roulement (10) comprend plusieurs pavés de gomme (15), et dans laquelle chaque pavé de gomme (15) comprend au moins un canal, de préférence plusieurs canaux parmi lesdits canaux trapézoïdaux (20), la lamelle (30) et plusieurs desdits canaux supplémentaires (40).

3. Bande de roulement selon la revendication 1, dans laquelle chaque canal trapézoïdal (20) à s'étend en formant un angle dans la plage de +/- 10 degrés dans la direction de rotation (35) de la bande de roulement.

4. Bande de roulement selon la revendication 1, dans laquelle chaque canal supplémentaire (40) à s'étend en formant un angle dans la plage de +/- 10 degrés dans la direction de rotation (35) de la bande de roulement.

5. Bande de roulement selon la revendication 1, dans laquelle chaque canal trapézoïdal (20) à s'étend en formant un angle de 0 degré dans la direction de rotation (35) de la bande de roulement.

6. Bande de roulement selon la revendication 1, dans laquelle chaque canal supplémentaire (40) à s'étend en formant un angle de 0 degré dans la direction de rotation (35) de la bande de roulement.

7. Bandage pneumatique comprenant une bande de roulement selon une des revendications précédentes.

8. Bandage pneumatique selon la revendication 7, comprenant en outre une paire de talons annulaires inextensibles ; une nappe de carcasse s'étendant entre les talons ; ainsi que ladite bande de roulement (10).
